# EUROPÄISCHE PATENTSCHRIFT

(11) **EP 0 385 966 B1**
(45) Veröffentlichungstag und Bekanntmachung des Hinweises auf die Patenterteilung: **01.12.1993**
(21) Anmeldenummer: 90890034.3
(22) Anmeldetag: 14.02.1990
(51) Int. Cl.: H02B 15/04

(54) **Mosaiktafel, insbesondere Schalt- und/oder Anzeigetafel**
Mosaic board, especially switch and/or display board
Tableau mosaique, en particulier tableau de commutation et/ou d'affichage

(30) Priorität: 01.03.1989 AT 453/89
(43) Veröffentlichungstag der Anmeldung: 05.09.1990
(73) Patentinhaber: Baumruck, Manfred, A-1120 Wien (AT)
(72) Erfinder: Baumruck, Manfred, A-1120 Wien (AT)
(74) Vertreter: Klein, Adam, Dipl.Ing.

(56) Entgegenhaltungen:
- DE-A- 1 490 310
- FR-A- 2 280 991
- FR-A- 2 301 944

## Beschreibung

Die Erfindung betrifft eine Mosaiktafel, insbesondere Schalt- und/oder Anzeigetafel, mit einer Anzahl von lösbar aneinandergereihten, gleich ausgebildeten, hohlen Mosaikfeldern, sowie mit jeweils in Halteelementen zusammengehöriger Mosaikfelder eingreifenden, im wesentlichen senkrecht zur Rück- bzw. Frontseite der Mosaikfelder einsteck- bzw. ausziebaren Verbindungselementen, wobei die Halteelemente vorzugsweise ringstückförmige Ansätze aufweisen und die Verbindungselemente im zugehörigen Bereich hinterschnitten flanschartig ausgebildet sind und im eingesteckten Zustand mit ihrem flanschartigen Bereich die Ansätze zusammengehöriger Mosaikfelder umfassen.

Derartige Mosaiktafeln sind in verschiedensten Ausführungen bekannt und weisen zumeist Mosaikfelder mit quadratischer oder rechteckiger Frontkontur auf, wobei in den meisten Anwendungsfällen überwiegend hohl bleibende Mosaikfelder als sogenannte Blindbausteine ohne jegliche Oberflächensymbole mit dazwischen angeordneten Mosaikfeldern, mit visuellen, unveränderlichen Symbolen zur Nachbildung und Darstellung von beliebigen Verteilungsanordnungen, sowie mit Aktivbausteinen bzw. Mosaikfeldern mit veränderlichen Anzeige- und/oder Betätigungsmitteln, wie Schaltern oder dergleichen, kombiniert sind. Es lassen sich damit auf einfache Weise z.B. Schalt- und Anzeigetafeln für die Steuerwarte von Anlagen der Energieerzeugung, Energieverteilung, Wasseraufbereitung usw. realisieren.

Mosaiktafeln für die genannten Zwecke sind beispielsweise aus der EP-A2 19 59 16, der DE-B2 28 29 721, der DE-B1 28 29 722, der DE-B2 1 228 692, der AT-PS 384 125 oder auch der AT-PS 380 591 bekannt, wobei jedoch in allen genannten Fällen relativ komplizierte Verbindungen der einzelnen Mosaikfelder untereinander bzw. der einzelnen Mosaikfelder an wabenartigen Traggerüsten oder dergleichen vorgesehen sind, die insbesondere das nachträgliche Auswechseln einzelner Mosaikfelder bzw. von Gruppen von Mosaikfeldern - wie etwa zur Berücksichtigung nachträglicher Änderungen an Verfahrensabläufen - unmöglich oder zumindest sehr kompliziert machen.

Aus der DE-B2 19 64 596 ist weiters eine entsprechende Mosaiktafel bekannt, bei der in den Seitenflächen der eine quadratische Frontkontur aufweisenden Mosaikfelder schwalbenschwan zförmige Nuten vorgesehen sind, in welche von der Rückseite der Mosaiktafel her als Verbindungselemente Keile einsteckbar sind, die einen Querschnitt in Form eines doppelten Schwalbenschwanzes haben und jeweils zwei aneinanderliegende Mosaikfelder verbinden. Zufolge der genannten Ausbildung der jeweils zusammenwirkenden Halteelemente und Verbindungselemente ergibt sich die Notwendigkeit relativ komplizierter Werkzeuge für die zumeist im Kunststoff-Spritzguß bzw. -Druckguß hergestellten Mosaikfelder und Verbindungselemente, wobei die letztgenannten bei dieser bekannten Anordnung zumindest zum Teil auch noch gleichzeitig für die Herstellung einer Verbindung zum erforderlichen Traggerüst ausgebildet sein müssen.

Schließlich ist z.B. aus der DE-A1 14 90 310 eine Mosaiktafel der eingangs genannten Art bekannt, bei der die einzelnen Mosaikfelder im Bereich ihrer Seitenkanten jeweils etwa mittig mittels ringstückförmiger Ansätze an den Mosaikfeldern und diese im von der Frontseite her eingesteckten Zustand der Verbindungselemente übergreifender, hinterschnitten flanschartig ausgebildeter Bereiche an den Verbindungselementen verbunden sind. Abgesehen von der Notwendigkeit separate Frontabdeckungen und komplizierte, mehrteilige Verbindungselemente zu verwenden hat diese Anordnung auch den Nachteil, daß die einzelne, mittige Verbindung keine besondere Stablität der Mosaiktafel sicherstellen kann.

Aufgabe der vorliegenden Erfindung ist es, eine Mosaiktafel der eingangs genannten Art so auszubilden, daß die genannten Nachteile der bekannten Anordnungen vermieden werden und daß insbesondere mit einfachen und leicht herstellbaren Bauteilen eine stabile Mosaiktafel aufgebaut werden kann, bei der auch der nachträgliche Austausch einzelner Mosaikfelder leicht möglich ist.

Dies wird gemäß der vorliegenden Erfindung dadurch erreicht, daß die Ansätze im Bereich der offenen Rückseite der Mosaikfelder angeordnet sind, daß die Halteelemente zusätzlich im Bereich der geschlossenen Frontseite der Mosaikfelder angeordnete, vorzugsweise kreissektorförmige, sich im wesentlichen in Richtung zur Rückseite erstreckende Nasen aufweisen, und daß die Verbindungselemente im Bereich ihres den Frontseiten der Mosaikfelder zugewandten Endes rohrförmig ausgebildet sind und im von der Rückseite der Mosaikfelder her eingesteckten Zustand mit ihrem rohrförmigen Ende die Nasen zusammengehöriger Mosaikfelder zusätzlich umfassen.

Da auf diese Weise hinterschnittene Nuten für die Halteelemente bzw. möglichst genau und über lange Führungsstrecken in zwei zusammengehörige derartige Nuten passende, doppel-schwalbenschwanzförmige Verbindungselemente und ähnliche komplizierte Formgebungen vermieden sind, sind einfache und kostengünstige Werkzeuge für die Herstellung möglich. Die im wesentlichen nur an der Frontseite und an der Rückseite der Mosaikfelder mit den dort angebrachten Teilelementen der Halteelemente zusammenwirkenden Verbindungselemente ermöglichen solide Verbindungen und damit eine insgesamt sehr stabile Mosaiktafel, die für viele Anwendungsfälle ohne jegliche separate Versteifung auskommt.

Nach einer besonders bevorzugten Ausgestaltung der Erfindung ist vorgesehen, daß die Halteelemente in an sich bekannter Weise im Bereich der senkrecht zur Frontseite liegenden Seitenkanten der Mosaikfelder angeordnet sind. Dies ermöglicht eine besonders stabile Verbindung, da damit alle im Bereich dieser Seitenkanten jeweils zusammenstoßenden Mosaikfelder gleichzeitig gemeinsam gehalten werden, was auch beispielsweise bei der Anordnung gemäß der eingangs bereits genannten EP-A2 19 59 16 nicht möglich ist, da dort die im Bereich der Seitenkanten vorgesehenen schwalbenschwanzförmigen Ansätze wiederum nur mit einem jeweils anliegenden gleichartigen Mosaikfeld zusammenwirken.

Für verschiedene Anwendungsfälle der erfindungsgemäßen Mosaiktafel sind ohne weiteres auch Mosaikfelder mit mehreckiger Frontkontur, beispielsweise sechseckig, vorstellbar, wobei dann eben die entsprechende Anzahl von Elementen gleichzeitig im Bereich ihrer zusammenstoßenden Seitenkanten fixiert wird.

Die Verbindungselemente können nach einer anderen Weiterbildung der Erfindung an ihrem flanschartigen Ende sich im wesentlichen in Richtung zum rohrförmigen Ende hin erstreckende federnde Ansätze aufweisen, die im eingesteckten Zustand in den Innenraum der Mosaikfelder ragen und Einbauteile, wie z. B. Leiterplatten, festlegen. Insbesonders die eingangs angesprochenen Schalt- oder Anzeigeelemente lassen sich damit auf einfache Weise beim Aufbau der Mosaiktafel im jeweiligen Mosaikfeld leicht fixieren, und können bedarfsweise auch nachträglich, z.B. zur Wartung, wieder herausgenommen werden.

Im letztgenannten Zusammenhang ist eine weitere Ausgestaltung der Erfindung von Vorteil, gemäß welcher an den Innenwänden der Mosaikfelder Anlageelemente, vorzugsweise in Form von Führungsrippen, vorgesehen sind, an denen sich die bei eingesetzten Verbindungselementen von deren federnden Ansätzen belasteten Einbauteile abstützen. Damit kann auf einfache Weise eine von der Anlage an die innere Frontwand des Mosaikfeldes unabhängige Fixierung von Einbauteilen ermöglicht werden.

Die federnden Ansätze der Verbindungselemente können dabei nach einer anderen bevorzugten Weiterbildung der Erfindung auch an ihren freien Enden mit nach außen geneigten Flächen abgeschrägt sein, was die spielfreie Festlegung der genannten Einbauteile relativ zu den Mosaikfeldern bzw. zu den Führungsrippen oder Anlageelementen vereinfacht.

Die Mosaikfelder liegen in weiterer Ausgestaltung der Erfindung mit ihren Seitenflächen im wesentlichen eng aneinander, wobei für die Verbindungselemente nutartige Einbuchtungen vorgesehen sind. Damit ist trotz insgesamt geringer Wandstärken einerseits ein maximaler Innenraum für die Mosaikfelder und andererseits eine weitgehend geschlossene Vorderfront beibehalten.

In weiterer Ausgestaltung der Erfindung ist im letztgenannten Zusammenhang vorgesehen, daß die Seitenflächen der Mosaikfelder pyramidenstumpfförmige Außenkontur aufweisen, wobei die frontseitigen Nasen für den Eingriff des rohrförmigen Endes der Verbindungselemente senkrecht zur Frontfläche fluchtend mit den rückseitigen Ansätzen sind, sodaß an der Frontfläche der Mosaiktafel Spalte zwischen den einzelnen Mosaikfeldern verbleiben. Dies ist abgesehen von einer Erleichterung der Herstellung insbesondere deshalb von Vorteil, da dadurch mittels eines von der Frontfläche der Mosaiktafel her in den Spalt einführbaren geeigneten Werkzeuges auch eine nachträgliche Demontage einzelner Mosaikfelder von der Frontseite her - beispielsweise für Wartungs- oder Austauschzwecke - erfolgen kann.

Die Verbindungselemente können nach einer anderen vorteilhaften Weiterbildung der Erfindung im Bereich ihres flanschartigen Endes Befestigungseinrichtungen, wie insbesondere Bohrungen, Gewindebohrungen oder Klemmarme, für Versteifungselemente, insbesondere Versteifungsleisten, der Mosaiktafel aufweisen. Damit können insbesondere großflächige Mosaiktafeln leicht und mit wenigen zusätzlichen Bauteilen noch stabiler gemacht werden.

Zur Umrahmung der äußersten Mosaikfelder der Mosaiktafel kann schließlich auch ein im Querschnitt im wesentlichen U-förmiger Rahmen vorgesehen sein, der mit seinen offenen Profilseiten den äußeren Seitenflächen der Mosaikfelder zugewandt ist und in die zugehörigen Enden der an den äußeren Seitenflächen angeordneten Verbindungselemente eingreifende Ansätze und Nasen aufweist. Damit ist beispielsweise die Fixierung einer erfindungsgemäßen Mosaiktafel in einem Schaltschrank oder dergleichen wesentlich vereinfacht.

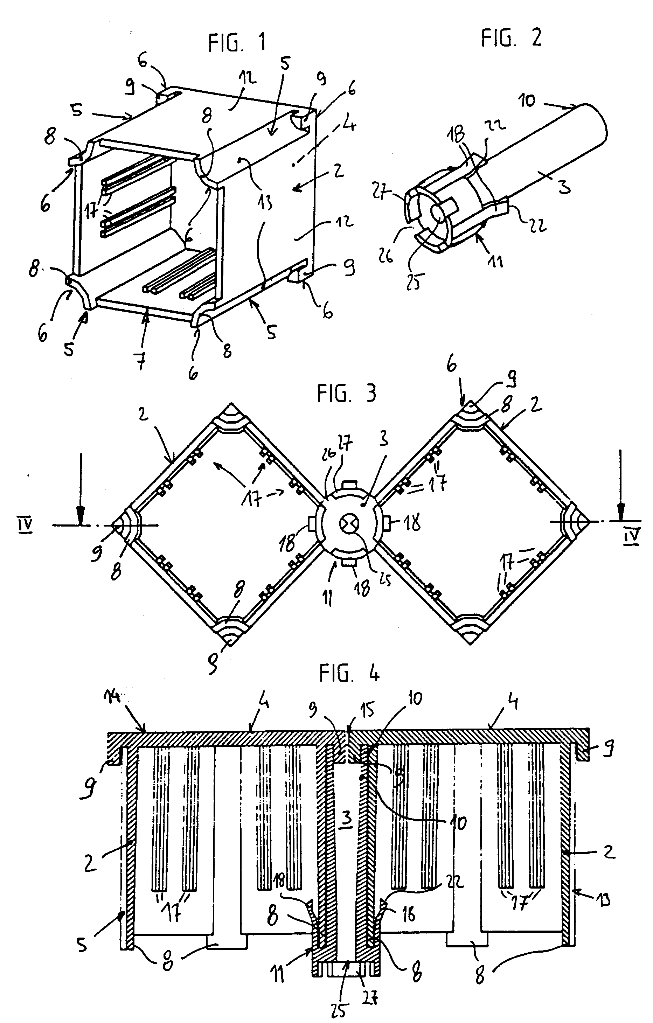

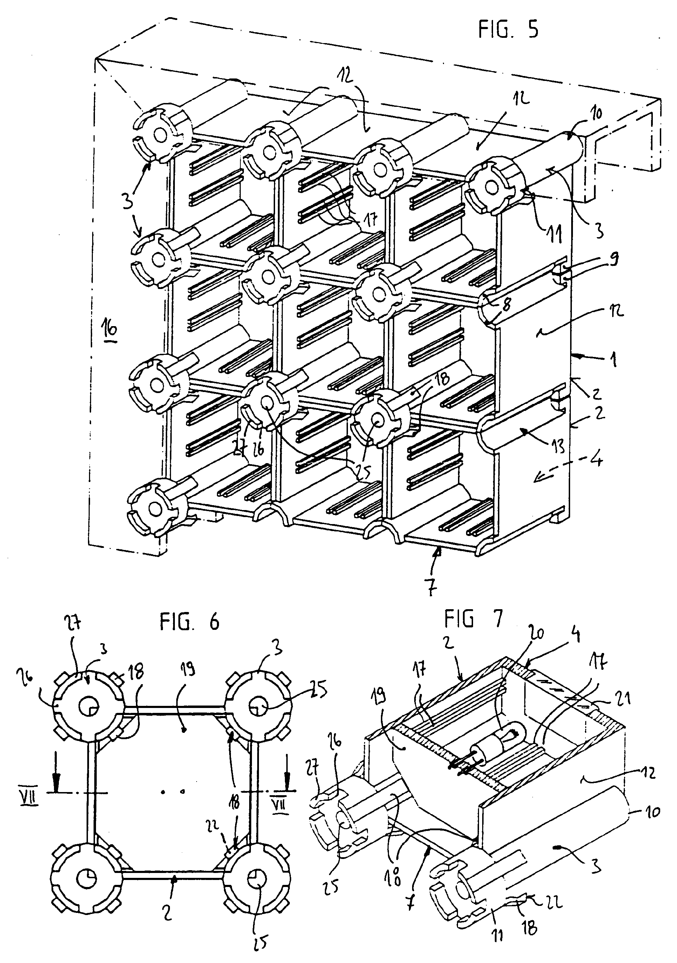

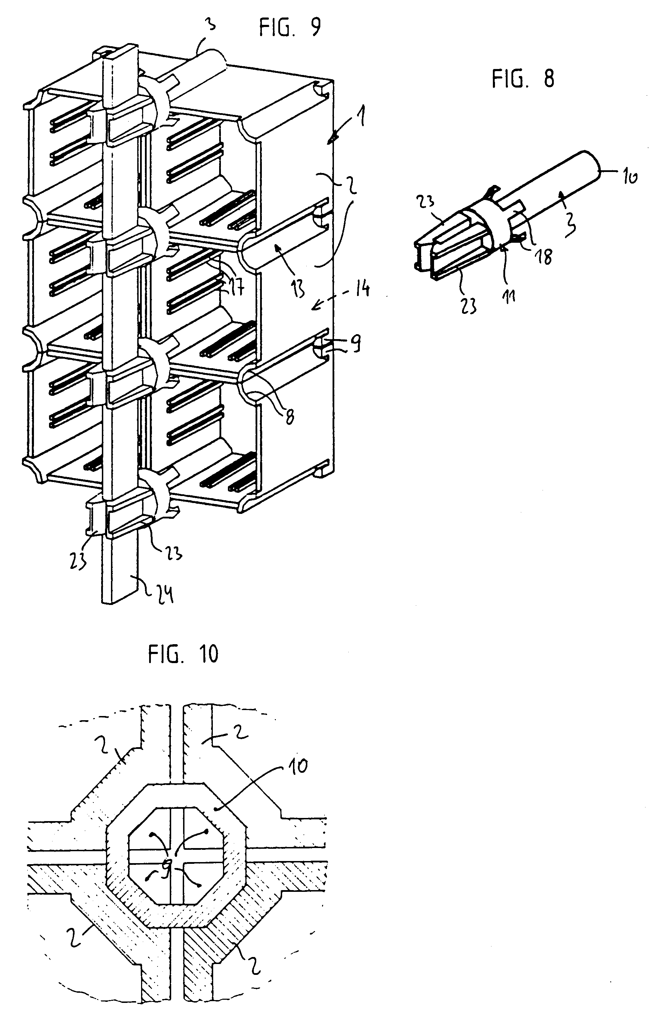

Die Erfindung wird im folgenden noch anhand der in der Zeichnung teilweise schematisch dargestellten Ausführungsbeispiele näher erläutert. Es zeigen dabei: Fig. 1 ein einzelnes Mosaikfeld und Fig. 2 ein zugehöriges Verbindungselement aus einer erfindungsgemäß ausgebildeten Mosaiktafel, Fig. 3 die Draufsicht auf zwei mit einem Verbindungselement gemäß Fig. 2 verbundene Mosaikfelder gemäß Fig. 1, Fig. 4 einen Schnitt entlang der Linie IV-IV in Fig. 3, Fig. 5 eine perspektivische Ansicht eines Teils einer erfindungsgemäßen Mosaiktafel, gebildet aus den Elementen gemäß Fig. 1 und 2, Fig. 6 die Draufsicht auf ein erfindungsgemäß ausgebildetes Mosaikfeld mit eingesetztem Einbauteil, Fig. 7 das Mosaikfeld aus Fig. 6 in entlang der Linie VII-VII in Fig. 6 geschnittener, perspektivischer Darstellung, Fig. 8 ein anderes, gemäß der Erfindung ausgebildetes Verbindungselement, Fig. 9 einen Teil einer zusammengebauten Mosaiktafel mit Verbindungselementen gemäß Fig. 8, und Fig. 10 ein vergrößertes Detail aus einem Schnitt einer weiteren erfindungsgemäßen Mosaiktafel im Bereich eines eingesteckten Verbindungselementes.

Die gemäß Fig. 5 von der Rückseite her perspektivisch dargestellte Mosaiktafel 1 besteht aus einer Anzahl von lösbar aneinandergereihten, gleich ausgebildeten, hohlen Mosaikfeldern 2 sowie Verbindungselementen 3, die einzeln und in ihrer gegenseitigen Zusammenwirkung in den Fig. 1 bis 4 näher dargestellt sind. Jedes der hier mit quadratischer Frontkontur ausgebildeten Mosaikfelder 2 weist im Bereich der senkrecht zur Frontseite 4 liegenden Seitenkanten 5 ausgebildete Halteelemente 6 auf, in welche in dem in den Fig. 3 bis 5 dargestellten zusammengesteckten Zustand die Verbindungselemente 3 eingreifen. Damit werden die im Bereich der Seitenkanten 5 jeweils zusammenkommenden vier bzw. zwei gleich ausgebildeten Mosaikfelder 2 auf die insbesondere in Fig. 4 ersichtliche Weise stabil zusammengehalten.

Die Halteelemente 6 weisen im Bereich der offenen Rückseite 7 der Mosaikfelder 2 angeordnete, etwa ringstückförmige Ansätze 8 sowie im Bereich der geschlossenen Frontseite 4 der Mosaikfelder angeordnete, etwa kreissektorförmige Nasen 9 auf. Die damit im zusammengesteckten Zustand zusammenwirkenden Verbindungselemente 3 sind im Bereich ihres den Frontseiten 4 der Mosaikfelder 2 zugewandten Endes 10 rohrförmig und im Bereich des anderen Endes 11 hinterschnitten flanschartig ausgebildet und umfassen somit im von der Rückseite 7 der Mosaikfelder 2 her eingesteckten Zustand mit ihrem rohrförmigen Ende die Nasen 9 und mit ihrem flanschartigen Ende die Ansätze 8 zusammengehöriger Mosaikfelder 2. Es ergibt sich damit eine äußerst stabile Verbindung der einzelnen Mosaikfelder 2 zu einer Mosaiktafel 1, wobei die Herstellung der einzelnen Bauteile beispielsweise aus zumindest zu einem gewissen Grad elastischem Kunststoff sehr einfach ist, da die verwendeten Werkzeuge keine Hinterschneidungen oder ähnlich komplizierte Formen aufweisen müssen.

Die dargestellten Mosaikfelder 2 liegen im zusammengebauten Zustand mit ihren Seitenflächen 12 im wesentlichen eng aneinander, wobei für die Verbindungselemente 3 jeweils nutartige Einbuchtungen 13 vorgesehen sind. Davon abgesehen könnten die Nasen 9 und die Ansätze 8 aber natürlich auch über die eigentliche Seitenkontur vorstehend ausgebildet werden, wobei die Frontseite 4 entweder größer ausgeführt wird oder eben auch Spalte zwischen den einzelnen Mosaikfeldern im zusammengesetzten Zustand akzeptiert werden. Mit der dargestellten Ausführung mit den Einbuchtungen 13 ergibt sich aber ein optimal großer Innenraum der einzelnen Mosaikfelder 2 bei gleichzeitig möglichst geringer Wandstärke und damit geringem Materialverbrauch.

Wie hier der Einfachheit der Darstellung wegen nur aus dem Schnitt in Fig. 4 ersichtlich ist, sind die Seitenflächen 12 der Mosaikfelder 2 mit leicht pyramidenstumpfförmiger Außenkontur ausgebildet, wobei die frontseitigen Nasen 9 für den Eingriff des rohrförmigen Endes 10 der Verbindungselemente 3 senkrecht zur Frontseite 4 fluchtend mit den rückseitigen Ansätzen sind, sodaß an der Frontfläche 14 der Mosaiktafel 1 geringe Spalte 15 zwischen den Mosaikfeldern 2 verbleiben. Das heißt also, daß die pyramidenstumpfförmig angeordneten Seitenflächen 12 sich im Bereich der Frontfläche 14 nicht berühren - die Berührung findet dort nur im Bereich der jeweils zusammengehörigen Nasen 9 der aneinanderliegenden Mosaikfelder 2 statt, wozu diese leicht über die Kontur der Frontseite 4 der Mosaikfelder 2 vorstehen, was aber beispielsweise in den Fig. 1 und 5 nicht dargestellt ist. Durch diese Spalte 15 kann von der Frontseite 4 her ein entsprechend schmales, beispielsweise mit einem kleinen Haken versehenes Werkzeug eingeführt werden, womit einzelne Mosaikfelder auch von der Frontseite her herausgelöst werden können.

Wie in Fig. 5 strichpunktiert dargestellt ist, kann zur Umrahmung der äußersten Mosaikfelder 2 der Mosaiktafel 1 ein im Querschnitt im wesentlichen U-förmiger Rahmen 16 vorgesehen sein, der mit seinen offenen Profilseiten den äußeren Seitenflächen 12 der Mosaikfelder 2 zugewandt ist und in die zugehörigen Enden 10, 11 der an den äußeren Seitenflächen 12 angeordneten Verbindungselemente 3 eingreifende Ansätze und Nasen aufweist. Diese können beispielsweise ebenfalls entsprechend den Ansätzen 8 und Nasen 9 in Fig. 1 ausgebildet sein, sind jedoch in Fig. 5 nicht dargestellt. Damit kann die Mosaiktafel 1 dann auf einfache Weise beispielsweise in einem Schaltpult oder dergleichen befestigt werden.

Die auch in den Fig. 1 bis 5 ersichtlichen Führungsrippen 17 an den Innenwänden der Mosaikfelder 2 sowie die federnden Ansätze 18 an den flanschartigen Enden 11 der Verbindungselemente 3 dienen gemäß den Fig. 6 und 7 zur Aufnahme bzw. Halterung von Einbauteilen, wie beispielsweise einer hier nur angedeuteten Leiterplatte 19 mit einer Lampe bzw. Leuchtdiode 20. Die Führungsrippen 17 bzw. deren der offenen Rückseite 7 der Mosaikfelder 2 zugewandte Enden dienen als Anlageelemente, an denen sich die bei eingesetzen Verbindungselementen 3 von deren federnden Ansätzen 18 belasteten Einbauteile - hier die Leiterplatte 19 - abstützen. Auf diese einfache Weise bleibt die Lampe bzw. Leuchtdiode 20 von der Frontseite 4 (welche hier einen entsprechend durchsichtigen bzw. durchscheinenden Einsatz 21 aufweist) beabstandet.

Wie insbesondere aus den Fig. 2, 4 und 6 ersichtlich ist, sind die federnden Ansätze 18 der Verbindungselemente 3 an ihren freien Enden mit nach außen geneigten Flächen 22 abgeschrägt, sodaß auf einfache Weise eine etwa aus Fig. 6 ersichtliche spielfreie Festlegung der Leiterplatte 19 gegenüber den Führungsrippen 17 bzw. dem Mosaikfeld 2 möglich ist.

Gemäß den Fig. 8 und 9 sind die Mosaikfelder 2 wiederum völlig den gemäß Fig. 1 bis 7 entsprechenden ausgeführt, sodaß zur Vermeidung von Wiederholungen hier ausdrücklich auf die obigen Ausführungen verwiesen wird. Die Verbindungselemente 3 unterscheiden sich von denen nach den Fig. 1 bis 7 nun dadurch, daß hier am flanschartigen Ende 11 Klemmarme 23 für eine Versteifungsleiste 24 angeordnet sind, was insbesondere bei großflächigen Mosaiktafeln 1 eine erhöhte Stabilität sicherstellt.

An dieser Stelle sei darauf hingewiesen, daß auch die Verbindungselemente 3 der vorher besprochenen Ausführungen gemäß den Fig. 1 bis 7 im Bereich ihres flanschartigen Endes 11 Befestigungseinrichtungen für dort nicht dargestellte zusätzliche Versteifungselemente der Mosaiktafel aufweisen, die von Bohrungen 25 bzw. auch Einkerbungen 26 an einem umlaufenden, aufgestellten Rand 27 des flanschartigen Endes 11 gebildet sind. In die Einkerbungen 26 eingelegte Versteifungsleisten oder dergleichen können dann in den Bohrungen oder Gewindebohrungen 25 entsprechend festgelegt werden.

Abweichend von der in den Fig. 1 bis 8 stets verwendeten Grundform des Kreises bzw. Zylinders für die zusammenwirkenden Flächen der Halteelemente 6 und Verbindungselemente 3 können natürlich bedarfsweise auch entsprechende andere Grundformen verwendet werden - in Fig. 10 sind beispielsweise auf einer achteckigen Rundform beruhende Halteelemente angenommen und in Form der zusammenwirkenden Flächen der frontseitigen Nasen 9 der Mosaikfelder 2 mit dem frontseitigen Ende 10 eines Verbindungselementes 3 dargestellt.

Weiters ist hier nochmals darauf hinzuweisen, daß abweichend von der in allen Figuren dargestellten Grundform einer quadratischen Frontseite 4 der Mosaikfelder 2 diese auch rechteckig oder vieleckig ausgeführt sein könnte.

## Patentansprüche

1. Mosaiktafel, insbesondere Schalt- und/oder Anzeigetafel, mit einer Anzahl von lösbar aneinandergereihten, gleich ausgebildeten, hohlen Mosaikfeldern (2), sowie mit jeweils in Halteelementen (6) zusammengehöriger Mosaikfelder (2) eingreifenden, im wesentlichen senkrecht zur Rück- (7) bzw. Frontseite (4) der Mosaikfelder (2) einsteck- bzw. ausziebaren Verbindungselementen (3), wobei die Halteelemente (6) vorzugsweise ringstückförmige Ansätze (8) aufweisen und die Verbindungselemente (3) im zugehörigen Bereich hinterschnitten flanschartig ausgebildet sind und im eingesteckten Zustand mit ihrem flanschartigen Bereich die Ansätze (8) zusammengehöriger Mosaikfelder (2) umfassen, **dadurch gekennzeichnet**, daß die Ansätze (8) im Bereich der offenen Rückseite (7) der Mosaikfelder (2) angeordnet sind, daß die Halteelemente (6) zusätzlich im Bereich der geschlossenen Frontseite (4) der Mosaikfelder (2) angeordnete, vorzugsweise kreissektorförmige, sich im wesentlichen in Richtung zur Rückseite (7) erstreckende Nasen (9) aufweisen, und daß die Verbindungselemente (3) im Bereich ihres den Frontseiten (4) der Mosaikfelder (2) zugewandten Endes (10) rohrförmig ausgebildet sind und im von der Rückseite (7) der Mosaikfelder (2) her eingesteckten Zustand mit ihrem rohrförmigen Ende (10) die Nasen (9) zusammengehöriger Mosaikfelder (2) zusätzlich umfassen.

2. Mosaiktafel nach Anspruch 1, dadurch gekennzeichnet, daß die Halteelemente (6) in an sich bekannter Weise im Bereich der senkrecht zur Frontseite (4) liegenden Seitenkanten (5) der Mosaikfelder (2) ausgebildet sind.

3. Mosaiktafel nach Anspruch 1 oder 2, dadurch gekennzeichnet, daß die Verbindungselemente (3) an ihrem flanschartigen Ende (11) sich im wesentlichen in Richtung zum rohrförmigen Ende (10) hin erstreckende federnde Ansätze (18) aufweisen, die im eingesteckten Zustand in den Innenraum der Mosaikfelder (2) ragen und Einbauteile, wie z.B. Leiterplatten (19), festlegen.

4. Mosaiktafel nach Anspruch 3, dadurch gekennzeichnet, daß an den Innenwänden der Mosaikfelder (2) Anlageelemente, vorzugsweise in Form von Führungsrippen (17), vorgesehen sind, an denen sich die bei eingesetzten Verbindungselementen (3) von deren federnden Ansätzen (18) belasteten Einbauteile (19) abstützen.

5. Mosaiktafel nach Anspruch 4, dadurch gekennzeichnet, daß die federnden Ansätze (18) der Verbindungselemente (3) an ihren freien Enden mit nach außen geneigten Flächen (22) abgeschrägt sind.

6. Mosaiktafel nach einem der Ansprüche 1 bis 5, dadurch gekennzeichnet, daß die Mosaikfelder (2) mit ihren Seitenflächen (12) im wesentlichen eng aneinander liegen und daß für die Verbindungselemente (3) nutartige Einbuchtungen (13) vorgesehen sind.

7. Mosaiktafel nach Anspruch 6, dadurch gekennzeichnet, daß die Seitenflächen (12) der Mosaikfelder (2) pyramidenstumpfförmige Außenkontur aufweisen, wobei die frontseitigen Nasen (9) für den Eingriff des rohrförmigen Endes (10) der Verbindungselemente (3) senkrecht zur Frontseite (4) fluchtend mit den rückseitigen Ansätzen (8) sind, sodaß an der Frontfläche (14) der Mosaiktafel (1) Spalte (15) zwischen den einzelnen Mosaikfeldern (2) verbleiben.

8. Mosaiktafel nach einem der Ansprüche 1 bis 7, dadurch gekennzeichnet, daß die Verbindungselemente (3) im Bereich ihres flanschartigen Endes (11) Befestigungseinrichtungen, wie insbesondere Bohrungen (25), Gewindebohrungen oder Klemmarme (23), für Versteifungselemente, insbesondere Versteifungsleisten (24), der Mosaiktafel (1) aufweisen.

9. Mosaiktafel nach einem der Ansprüche 1 bis 8, dadurch gekennhzeichnet, daß zur Umrahmung der äußersten Mosaikfelder (2) der Mosaiktafel (1) ein im Querschnitt im wesentlichen U-förmigen Rahmen (16) vorgesehen ist, der mit seinen offenen Profilleisten den äußeren Seitenflächen (12) der Mosaikfelder (2) zugewandt ist und in die zugehörigen Enden (10,11) der an den äußeren Seitenflächen (12) angeordneten Verbindungselemente (3) eingreifende Ansätze und Nasen aufweist.

## Claims

1. A mosaic panel, in particular a control panel and/or display panel, with a number of hollow mosaic fields (2) which are detachably arranged adjacent to one another and similarly formed, as well as with insertable or detachable connecting elements (3) which engage in mosaic fields (2) belonging in holding elements and which are substantially vertical to the back side (7) or front side (4) of the mosaic fields, with the holding elements (6) being preferably provided with banjo-union-like noses (8) and the connecting elements (3) being arranged in the pertinent zone in a flange-like undercut manner and comprising in the inserted position in their flange-like zone the noses (8) of respective mosaic fields (2), characterized in that the noses (8) are arranged in the zone of the open rear side (7) of the mosaic fields, that the holding elements (6) are provided in the zone of the closed front side (4) of the mosaic fields with noses (9) extending substantially in the direction towards the rear side (7) and being preferably sector-like, and that the connecting elements (3) are arranged tube-like in the zone of its end showing towards the front sides (4) of the mosaic fields (2) and that they additionally encompass the nose (9) of respective mosaic fields (2) with their tube-like end (10) in the condition when inserted from the rear side (7) of the mosaic fields (2).

2. A mosaic panel as claimed in claim 1, characterized in that the holding elements (6) are arranged in the known manner in the zone of the lateral edges (5) of the mosaic fields (2) situated vertical to the front side (4).

3. A mosaic panel as claimed in claim 1 or 2, characterized in that the connecting elements (3) are provided at its flange-like end (11) with yielding noses (18) which extend substantially in the direction twoards the tube-like end (10) and which project into the interior space of the mosaic fields (2) in the inserted condition and fix built-in components such as printed circuit boards, for example.

4. A mosaic panel as claimed in claim 3, characterized in that guiding elements are provided on the inner walls of the mosaic fields (2), preferably in form of guiding ribs (17), on whose yielding noses (18) and under the load of which the built-in elements rest when the connecting elements (3) are inserted.

5. A mosaic panel as claimed in claim 4, characterized in that the yielding noses (18) of the connecting elements (3) are tapered at their free ends with outwardly inclined surfaces (22).

6. A mosaic panel as claimed in one of the claims 1 to 5, characterized in that the mosaic fields (2) with their lateral surfaces (12) substantially sit close to one another and that groove-like recesses (13) are provided for the connecting elements (3).

7. A mosaic panel as claimed in claim 6, characterized in that the lateral surfaces (12) of the mosaic fields (2) are provided with the shape of a truncated pyramid, with the front-sided noses (9) for the engagement of the tube-like end (10) of the connecting elements (3) being vertical to the front side (4) and in alignment with the rear-sided noses (8), so that a gap (15) remains between the individual mosaic fields (2) on the front area (14) of the mosaic panel (1).

8. A mosaic panel as claimed in one of the claims 1 to 7, characterized in that the connecting elements (3) are provided in the zone of its flange-like end (11) with fixing devices such as, in particular, bores (25), threaded bores or clamping arms (23) for stiffening elements, in particular stiffening selvedges (24), of the mosaic panel (1).

9. A mosaic panel as claimed in one of the claims 1 to 8, characterized in that a frame (16) with a substantial U-shape in its cross section is provided for framing the outermost mosaic fields (2), which frame shows towards the outer lateral surfaces (12) of the mosaic fields (2) with its open profile selvedges and which is provided with noses and shoulders engaging in the pertinent ends (10, 11) of the connecting elements (3) arranged on the outer lateral surfaces (12).

## Revendications

1. Tableau mosaique, en particulier tableau de commande et/ou d'affichage comportant un grand nombre de champs mosaïques (2) creux agencés les uns à côté des autres, de manière amovible, de forme identique et des éléments de raccordement (3) s'engageant dans des éléments de maintien (6) de champs mosaïques solidaires(2) et essentiellement enfichables et retirables verticalement par rapport à la face arrière (7) ou la face frontale (4) des champs mosaïques (2), les éléments de maintien (6) comportant de préférence des embases annulaires (8) et les éléments de raccordement (3) étant réalisés de façon contre-dépouillée à bride dans la zone y relative et enveloppant, à l'état enfiché, par leur zone à brides, les embases (8) des champs mosaïques solidaires (2),
**caractérisé par le fait** que les embases (8) sont agencées dans la zone de la face arrière ouverte (7) des champs mosaïques (2), que les éléments de maintien (6) présentent en outre, au niveau de la face frontale fermée (4) des champs mosaïques (2), des tenons (9) de préférence en forme de secteur de cercle et s'étendant essentiellement en direction de la face arrière (7), et que les éléments de raccordement (3) sont réalisés, au niveau de leur extrémité (10) tournée vers les faces frontales (4) des champs mosaïques (2) en forme de tubes et enveloppent en outre, à l'état enfiché de la face arrière (7) des champs mosaïques (2), avec leur extrémité tubulaire (10), les tenons (9) des champs mosaïques solidaires (2) .

2. Tableau mosaïque selon revendication 1 caractérisé par le fait que les éléments de maintien (6) sont réalisés, comme on le sait en règle générale, dans les chants latéraux des champs mosaïques (2) situés verticalement par rapport au côté frontal (4).

3. Tableau mosaïque selon revendication 1 ou 2, caractérisé par le fait que les éléments de raccordement (3) présentent à leur extrémité à bride (11) des embases à ressort (18) dirigées essentiellement en direction de l'extrémité tubulaire (10), et qui, à l'état enfiché, dépassent le compartiment intérieur des champs mosaïques (2) et déterminent des pièces de montage telles que p.ex. des circuits imprimés (19).

4. Tableau mosaïque selon revendication 3, caractérisé par le fait que sont prévus sur les parois intérieures des champs mosaïques (2) des éléments d'installation, de préférence sous forme de nervures de guidage (17), sur lesquels s'appuient, dans le cas d'éléments de raccordement montés (3) des pièces de montage (19) sollicitées par les embases à ressort (18) des éléments de raccordement.

5. Tableau mosaïque selon revendication 4, caractérisé par le fait que les embases à ressort (18) des éléments de raccordement (3) sont bisautées sur leurs extrémités libres, avec des surfaces (22) inclinées vers l'extérieur.

6. Tableau mosaïque selon l'une des revendications 1 à 5, caractérisé par le fait que les champs mosaïques (2) sont essentiellement très rapprochés les uns des autres au niveau de leurs faces latérales (12) et que des creux rainurés (13) sont prévus pour les éléments de raccordement (3).

7. Tableau mosaïque selon revendication 6, caractérisé par le fait que les faces latérales (12) des champs mosaïques (2) présentent un contour de forme de tronc de pyramide et que les tenons (9) côté frontal sont agencés verticalement par rapport au côté frontal (4) et alignés avec les embases arrières (8) pour l'engagement de l'embout tubulaire (10) des éléments de raccordement (3), de manière à ce qu'il reste, sur la face frontale (14) du tableau mosaïque (1) des fentes (15) entre les différents champs mosaïques (2).

8. Tableau mosaïque selon l'une des revendications 1 à 7, caractérisé par le fait que les éléments de raccordement (3) présentent, au niveau de leur extrémité à bride (11), des dispositifs de fixation, tels que des alésages (25), des filetages ou des bras de serrage (23) pour des éléments raidisseurs, en particulier des nervures raidisseuses (24) du tableau mosaïque (1).

9. Tableau mosaïque selon l'une des revendications 1 à 8, caractérisé par le fait que pour l'encadrement des champs mosaïques extérieurs (2) du tableau mosaïque (1) on a prévu un cadre (16) à section essentiellement en forme d'U et qui, par ses nervures profilées ouvertes, est dirigé vers les surfaces latérales externes (12) des champs mosaïques (2) et est doté d'embases et de tenons s'engageant dans les extrémités correspondantes (10, 11) des éléments de raccordement (3) agencés sur les côtés latéraux externes (12).
